# EUROPEAN PATENT SPECIFICATION

(11) **EP 3 951 141 B1**
(45) Date of publication and mention of the grant of the patent: **14.08.2024**
(21) Application number: 19923679.5
(22) Date of filing: 28.10.2019
(51) Int. Cl.: F01K 27/02, F01K 25/10, H01M 8/04111, F17C 9/02, F01K 13/00, F17D 1/00, H01M 8/0612, H01M 8/0668, H01M 8/0662

(54) **GAS EXPANSION POWER GENERATION SYSTEM**
GASEXPANSIONSENERGIEERZEUGUNGSSYSTEM
SYSTÈME DE PRODUCTION D'ÉNERGIE À EXPANSION DE GAZ

(30) Priority: 04.04.2019 KR 20190039448
(43) Date of publication of application: 09.02.2022
(73) Proprietor: Hanwha Power Systems Co., Ltd., Changwon-si, Gyeongsangnam-do 51542 (KR)
(72) Inventor: HAN, Jun Kyu, Changwon-Si Gyeongsangnam-do 51542 (KR); SHIN, Bong Gun, Changwon-Si Gyeongsangnam-do 51542 (KR)
(74) Representative: Gulde & Partner
(86) International application number: PCT/KR2019/014229
(87) International publication number: WO 2020/204292

(56) References cited:
- WO-A1-2018/213806
- JP-A- H07 217 800
- KR-A- 20110 047 905
- KR-A- 20110 047 905
- KR-A- 20140 100 454
- KR-A- 20170 076 913
- US-A1- 2010 154 471
- US-A1- 2013 328 310
- US-A1- 2014 000 275

## Description

### [Technical Field]

The present invention relates to a gas expansion power generation system. Specifically, the present invention relates to a gas expansion power generation system which is installed in a facility for supplying natural gas and reduces the pressure of the natural gas to concurrently generate electric power using energy generated during the reduction in pressure.

### [Background Art]

Liquefied natural gas (LNG) stored in a storage tank of an LNG receiving terminal is transmitted at a high pressure of 70 bar using a gas pipeline network. The pressure of LNG is forcibly decreased from a high pressure of 70 bar in static pressure management stations across the country and is supplied to power plants and city gas required places at pressures of 25 bar and 8.5 bar, respectively.

In this case, it is common to add a pre-heating device for raising the temperature of natural gas before a decrease in pressure in order to prevent the temperature of natural gas from dropping in the power plants or the city gas required places when the pressure of natural gas is decreased in the static pressure management stations.

Since such a pre-heating device uses a portion of supplied natural gas as a heat source to raise the temperature of natural gas, there are problems in that harmful substances such as NOₓ and SOₓ are generated, and a supply amount of natural gas should be set in consideration of pre-heating.

On the other hand, when a volume of natural gas is expanded while the pressure of natural gas is reduced, separate differential pressure energy can be generated, and by utilizing the separate differential pressure energy, a system for a decrease in pressure of natural gas and concurrently generating electricity can be implemented.

Accordingly, there is a need for an invention capable of utilizing electric power generated during the decrease in pressure while using a separate heat source in order to pre-heat natural gas. WO 2018 213 806 A1 discloses a two-phase thermal pump that uses a fluid storage tank with natural gas that can be heated and expanded in a turbine. Certain valves are disclosed that are used for the distribution of the natural gas in a power generating unit.

KR 10 2011 0 047 905 A discloses an energy recovery apparatus and an energy recovery method for a natural gas static pressure facility using a fuel cell-turboexpander integrated energy recovery system.

### [Disclosure]

### [Technical Problem]

The present invention is directed to providing a gas expansion power generation system which decreases the pressure of natural gas in a line, through which the natural gas is supplied, and concurrently generates electric power through the expansion of the natural gas.

The present invention is directed to maximizing energy efficiency and fuel cost reduction by linking a gas expansion power generation system with a steam methane reforming (SMR) process and a fuel cell.

However, aspects of the present invention are not restricted to those set forth herein. The above and other aspects will become more apparent to one of ordinary skill in the art to which the disclosure pertains by referencing the detailed description of the present invention given below.

### [Technical Solution]

According to embodiments of the present disclosure, a gas expansion power generation system comprises: a heating unit configured to raise the temperature of natural gas; a flow rate adjustment unit configured to adjust a flow rate of the natural gas; and a power generation unit configured to reduce the pressure of the natural gas and concurrently expand the natural gas and configured to generate electric power through energy generated when the natural gas is expanded, wherein the natural gas sequentially moves to the heating unit, the flow rate adjustment unit, and the power generation unit, and the heating unit receives waste heat generated in a natural gas reforming process as a heat source to preheat the natural gas before moving the power generation unit, or to receive waste heat generated in a natural gas reforming process together with waste heat generated in a power generation process through a fuel cell as a heat to preheat the natural gas before moving the power generation unit.

According to an embodiment of the present disclosure, the heating unit raises the temperature of the natural gas in consideration of the temperature decreased when the pressure of the natural gas is decreased in the power generation unit.

According to an embodiment of the present disclosure, the flow rate adjustment unit adjusts the flow rate of the natural gas such that the natural gas moves to the power generation unit in consideration of the amount of the natural gas of which the pressure is decreased in the power generation unit.

According to an embodiment of the present disclosure, the flow rate adjustment unit adjusts the flow rate of the natural gas such that the natural gas moves to a pressure regulator connected parallel with the power generation unit, when the amount of the natural gas, of which the pressure is decreased in the power generation unit, is exceeded..

According to an embodiment of the present disclosure, a portion of the electric power generated by the power generation unit is utilized in the natural gas reforming process.

According to an embodiment of the present disclosure, hydrogen generated in a natural gas reforming process is used in the power generation process through a fuel cell.

According to an embodiment of the present disclosure, the natural gas reforming process includes:
a process in which a desulfurization unit desulfurizes the natural gas of which the pressure is decreased in a pressure regulator, a steam reforming unit primarily steam-reforms the desulfurized natural gas into hydrogen and CO, a steam transition unit increases the concentration of hydrogen through a steam transition process, and an unreacted gas removal unit removes unreacted CH₄, CO, and CO₂ to produce hydrogen, and
a portion of waste heat generated when the steam transition unit increases the concentration of hydrogen is supplied to the power generation unit.

According to an embodiment of the present disclosure, a steam generating unit is provided to supply high-temperature steam to the steam reforming unit when the steam reforming unit primarily produces hydrogen and CO, and the remaining portion of the waste heat generated when the steam transition unit increases the concentration of hydrogen is supplied to the steam generating unit.

According to an embodiment of the present disclosure, partial electric power of the electric power generated by the power generation unit is stored in a grid, and the remaining partial electric power thereof is supplied to the steam generating unit so that the steam generating unit generates high-temperature steam.

According to an embodiment of the present disclosure, hydrogen produced in the natural gas reforming process is supplied as a source of the fuel cell, and electric power generated in the fuel cell is stored in the grid.

According to embodiments of the present disclosure of a gas expansion power generation process, a heating unit raises the temperature of natural gas; a flow rate adjustment unit adjusts a flow rate of the natural gas; and a power generation unit reduces the pressure of the natural gas and concurrently expands the natural gas and generates electric power through energy generated when the natural gas is expanded, wherein the natural gas is sequentially moved to the heating unit, the flow rate adjustment unit, and the power generation unit, and wherein the heating unit receives waste heat generated in a natural gas reforming process or waste heat generated in a power generation process through a fuel cell as a heat source.

According to an embodiment of the present disclosure of the gas expansion power generation process, the heating unit raises the temperature of the natural gas in consideration of a temperature decreased when the pressure of the natural gas is decreased in the power generation unit.

According to an embodiment of the present disclosure of the gas expansion power generation process, in consideration of an amount of the natural gas of which the pressure is decreased in the power generation unit, the flow rate adjustment unit adjusts the flow rate of the natural gas such that the natural gas moves to the power generation unit.

According to an embodiment of the present disclosure of the gas expansion power generation process, when the amount of the natural gas, of which the pressure is decreased in the power generation unit, is exceeded, the flow rate adjustment unit adjusts the flow rate of the natural gas such that the natural gas moves to a pressure regulator connected parallel with the power generation unit.

According to an embodiment of the present disclosure of the gas expansion power generation process, a portion of the electric power generated by the power generation unit is utilized in the natural gas reforming process.

According to an embodiment of the present disclosure of the gas expansion power generation process, hydrogen generated in the natural gas reforming process is used in the power generation process through the fuel cell.

According to an embodiment of the present disclosure of the gas expansion power generation process, the natural gas reforming process includes a process in which a desulfurization unit desulfurizes the natural gas of which the pressure is decreased in a pressure regulator, a steam reforming unit primarily steam-reforms the desulfurized natural gas into hydrogen and CO, a steam transition unit increases the concentration of hydrogen through a steam transition process, and an unreacted gas removal unit removes unreacted CH₄, CO, and CO₂ to produce hydrogen, and a portion of waste heat generated when the steam transition unit increases the concentration of hydrogen is supplied to the power generation unit.

According to an embodiment of the present disclosure of the gas expansion power generation process, a steam generating unit is provided to supply high-temperature steam to the steam reforming unit when the steam reforming unit primarily produces hydrogen and CO, and the remaining portion of the waste heat generated when the steam transition unit increases the concentration of hydrogen is supplied to the steam generating unit.

According to an embodiment of the present disclosure of the gas expansion power generation process, partial electric power of the electric power generated by the power generation unit is stored in a grid, and the remaining partial electric power thereof is supplied to the steam generating unit so that the steam generating unit generates high-temperature steam. According to an embodiment of the present disclosure of the gas expansion power generation process hydrogen produced in the natural gas reforming process is supplied as a source of the fuel cell, and electric power generated in the fuel cell is stored in the grid.

### [Advantageous Effects]

According to the present invention, electric power is generated by decreasing the pressure of natural gas and concurrently expanding the natural gas in a line through which the natural gas is supplied. Accordingly, the present invention has an effect of generating electric power without a separate power generation facility.

In addition, in the present invention, a gas expansion power generation system is linked with a steam methane reforming (SMR) process and a fuel cell. Accordingly, the present invention has an effect of maximizing energy efficiency and fuel cost reduction.

The effects of the present invention are not limited to the above-described effects and other effects which are not described herein will become apparent to those skilled in the art from the following description.

### [Description of Drawings]

FIG. 1 is a block diagram of a gas expansion power generation system according to one exemplary embodiment of the present invention.
FIG. 2 is a diagram for describing a process in which natural gas moves in a gas expansion power generation system according to one exemplary embodiment of the present invention.
FIG. 3 is a diagram for describing a process in which a gas expansion power generation system according to one exemplary embodiment of the present invention is linked with a steam methane reforming (SMR) process and a fuel cell process.

### *Description of Numbers

1: power plant
2: city gas
3: Grid
10: pressure regulator 11, 12, 13: plurality of valves
100: gas expansion power generation system
101: heating unit 103: flow rate adjustment unit
105: power generation unit
301: desulfurization unit 303: steam reforming unit
305: steam transition unit 307: unreacted gas removal unit
309: steam generating unit
400: fuel cell

### [Modes of the Invention]

Various changes may be made to embodiments of the present disclosure, and the present disclosure may have various embodiments which will be described in detail with reference to the drawings. However, the embodiments according to concepts of the present disclosure are not construed as limited to the described embodiments, and include all changes, equivalents, or substitutes that do not depart from the spirit and technical scope of the present disclosure.

The terms used in the present disclosure are for the purpose of describing particular non-limiting example embodiments only and are not intended to be limiting. The singular forms are intended to include the plural forms as well, unless the context clearly indicates otherwise. The term "include" or "has" used in the present disclosure is to indicate the presence of features, numbers, steps, operations, elements, parts, or a combination thereof described in the specifications, and does not preclude the presence or addition of one or more other features, numbers, steps, operations, elements, parts, or a combination thereof.

All of the terms used herein including technical or scientific terms have the same meanings as those generally understood by an ordinary skilled person in the related art unless they are defined otherwise. The terms defined in a generally used dictionary should be interpreted as having meanings that are the same as or similar with the contextual meanings of the relevant technology and should not be interpreted as having ideal or exaggerated meanings unless they are clearly defined in the present disclosure.

Hereinafter, configurations of exemplary embodiments of the present invention will be described in detail with reference to the accompanying drawings.

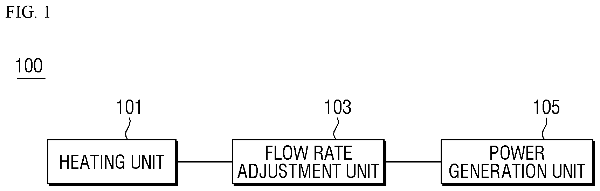

FIG. 1 is a block diagram of a gas expansion power generation system according to one exemplary embodiment of the present invention.

Referring to FIG. 1, a gas expansion power generation system 100 according to one exemplary embodiment of the present invention includes a heating unit 101, a flow rate adjustment unit 103, and a power generation unit 105.

The heating unit 101 raises the temperature of natural gas. Specifically, the heating unit 101 raises the temperature of the natural gas in consideration of the temperature decreased when a pressure of the natural gas is decreased in the power generation unit 105.

For example, when the temperature of the natural gas is set to drop by 70 °C during the decrease in pressure in the power generation unit 105, the heating unit 101 raises the temperature of the natural gas by 70 °C in advance to allow the natural gas to move the power generation unit 105. That is, the heating unit 101 pre-heats the natural gas.

In this case, a conventional gas expansion power generation system has burned a portion of natural gas flowing into the heating unit 101 to use combustion heat as a heat source for raising a temperature of the natural gas. Accordingly, there is a problem in that harmful substances such as NOₓ and SOₓ are generated.

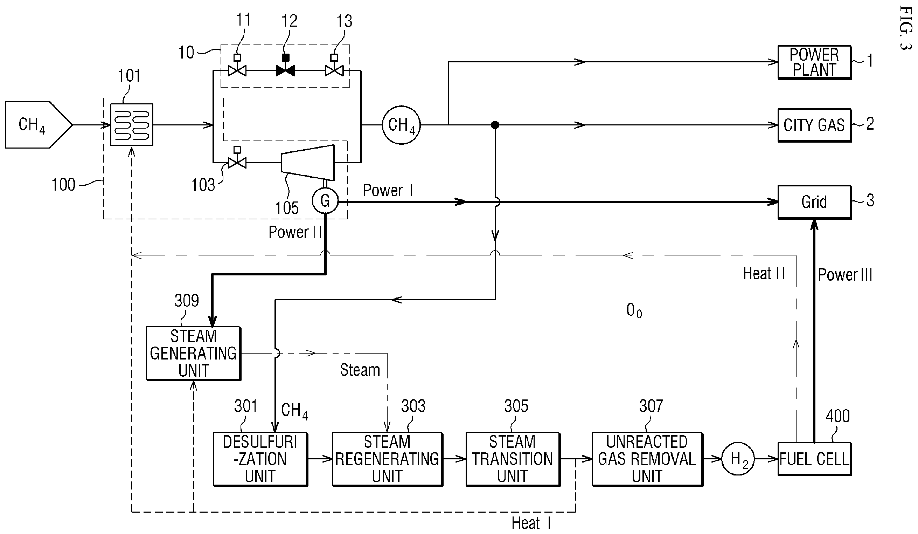

However, since the gas expansion power generation system 100 according to one exemplary embodiment of the present invention is linked with a natural gas reforming process and a power generating process through a fuel cell, the heating unit 101 receives a heat source from waste heat generated in the natural gas reforming process and the power generating process through a fuel cell. Therefore, in the gas expansion power generation system 100 according to one exemplary embodiment of the present invention, since there is no need to burn a portion of the natural gas flowing into the heating unit 101, there is an advantage in that harmful substances and the like are not generated. A detailed description thereof will be provided below with reference to FIG. 3.

The flow rate adjustment unit 103 adjusts a flow rate of the natural gas. Specifically, in consideration of an amount of the natural gas of which the pressure can be decreased in the power generation unit 105, the flow rate adjustment unit 103 adjusts the flow rate of the natural gas such that the natural gas moves to the power generation unit 105.

Meanwhile, when an amount of the natural gas, of which the pressure can be decreased in the power generation unit 105, is exceeded, the flow rate adjustment unit 103 adjusts the flow rate of the natural gas such that the natural gas moves to a pressure regulator 10 connected parallel with the power generation unit 105. A detailed description of the pressure regulator 10 will be described below.

The power generation unit 105 reduces the pressure of the natural gas and concurrently expands the natural gas to generate electric power through energy generated when the natural gas is expanded.

That is, unlike a general pressure regulator installed on a line through which natural gas moves, in the gas expansion power generation system 100 according to one exemplary embodiment of the present invention, the power generation unit 105 performs a function of decreasing the pressure of natural gas and concurrently generating electric power through the expansion of the natural gas, and thus, the gas expansion power generation system 100 has high utilization.

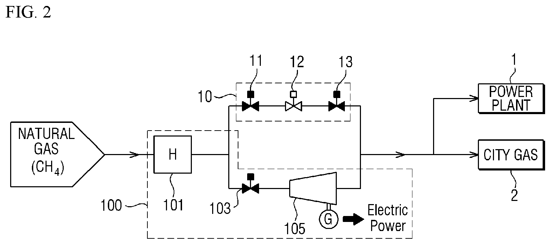

FIG. 2 is a diagram for describing a process in which natural gas moves in a gas expansion power generation system according to one exemplary embodiment of the present invention.

Referring to FIG. 2, natural gas (CH₄) is introduced into a heating unit 101, and then, a temperature thereof is raised. The natural gas (CH₄) of which the temperature is raised in the heating unit 101 moves to a power generation unit 105 through a flow rate adjustment unit 103. In this case, as described above, the flow rate adjustment unit 103 adjusts a flow rate such that the natural gas (CH₄) moves first to the power generation unit 105, and the power generation unit 105 decreases a pressure of the natural gas (CH₄) and generates electric power. Then, as described above, when an amount of the natural gas (CH₄), of which the pressure can be decreased in the power generation unit 105, is exceeded, the flow rate adjustment unit 103 adjusts the flow rate of the natural gas (CH₄) such that the natural gas (CH₄) moves to a pressure regulator 10 connected parallel with the power generation unit 105. Thereafter, the pressure regulator 10 adjusts an opening/closing degree of a plurality of valves 11, 12, and 13 to decrease the pressure of the natural gas (CH₄). Next, the natural gas of which the pressure is decreased in each of the power generation unit 105 and the pressure regulator 10 is supplied for a power plant 1, a city gas 2, and/or like.

FIG. 3 is a diagram for describing a process in which a gas expansion power generation system according to one exemplary embodiment of the present invention is linked with a steam methane reforming (SMR) process and a fuel cell process.

The SMR process is a process of producing hydrogen (H₂) by reforming natural gas (CH₄). Specifically, referring to FIG. 3, a desulfurization unit 301 desulfurizes the natural gas (CH₄) of which a pressure is decreased in each of a power generation unit 105 and a pressure regulator 10 to remove a sulfur component remaining in the natural gas (CH₄). Thereafter, a steam reforming unit 303 primarily produces hydrogen and CO by steam-reforming the natural gas from which the sulfur component is removed in the desulfurization unit 301. Subsequently, a steam transition unit 305 increases a concentration of hydrogen through a steam transition process. Thereafter, an unreacted gas removal unit 307 removes unreacted CH₄, CO, and CO₂ through a pressure swing adsorption (PSA) process to produce hydrogen (H₂).

In this case, when the steam reforming unit 303 primarily produces hydrogen and CO, high-temperature steam is supplied through a steam generating unit 309. The steam generating unit 309 supplies the high-temperature steam using first waste heat Heat I as a heat source, wherein the first waste heat Heat I is generated when the steam transition unit 305 increases the concentration of hydrogen through the steam transition process.

In addition, the first waste heat Heat I is supplied to a heating unit 101 as well as the steam generating unit 309 and serves as a heat source required for the heating unit 101 to raise a temperature of natural gas (CH₄) together with second waste heat Heat II to be described below.

A fuel cell 400 is a device which generates electric power through a chemical reaction between hydrogen (H₂) and oxygen (O₂). In this case, heat is generated according to the chemical reaction between hydrogen (H₂) and oxygen (O₂) and is generally discarded heat. Thus, in the present invention, the discarded heat is defined as the second waste heat Heat II.

As described above, the second waste heat Heat II is supplied to the heating unit 101 and thus serves as a heat source required for the heating unit 101 to raise the temperature of the natural gas (CH₄) together with the first waste heat Heat I.

That is, in the gas expansion power generation system 100 according to one exemplary embodiment of the present invention, since waste heat generated in the SMR process and a process of the fuel cell 400 is used as a heat source for heating natural gas without being discarded, there is an effect of maximizing efficiency due to fuel cost reduction and energy recycling.

In addition, referring to FIG. 3, in electric power generated by the power generation unit 105, first electric power Power I is stored in a grid 3, but second electric power Power II is supplied to the steam generating unit 309, thereby allowing the steam generating unit 309 to generate high-temperature steam.

That is, in the gas expansion power generation system 100 according to one exemplary embodiment of the present invention, electric power generated by the power generation unit 105 is used in the SMR process, thereby obtaining an effect of reducing energy costs.

In addition, referring to FIG. 3, hydrogen (H₂) produced through the SMR process is supplied as a source of the fuel cell 400, thereby allowing the fuel cell 400 to produce third electric power Power III. In this case, the third electric power Power III produced by the fuel cell 400 is stored in a grid 3.

That is, the gas expansion power generation system 100 according to one exemplary embodiment of the present invention is linked with the SMR process and the fuel cell process to complementally perform supplying heat and supplying power, thereby having an effect of maximizing energy efficiency and cost reduction.

## Claims

1. A gas expansion power generation system (100) comprising:
a heating unit (101) configured to raise the temperature of natural gas;
a flow rate adjustment unit (103) configured to adjust a flow rate of the natural gas; and
a power generation unit (105) configured to reduce the pressure of the natural gas and concurrently expand the natural gas and configured to generate electric power through energy generated when the natural gas is expanded,
wherein the natural gas is sequentially movable to the heating unit (101), the flow rate adjustment unit (103), and the power generation unit (105), **characterized in that**
the heating (101) unit is configured to receive waste heat generated in a natural gas reforming process as a heat source to preheat the natural gas before moving the power generation unit, or to receive waste heat generated in a natural gas reforming process together with waste heat generated in a power generation process through a fuel cell (400) as a heat source to preheat the natural gas before moving the power generation unit.

2. The gas expansion power generation system (100) of claim 1, wherein the heating unit (101) is configured to raise the temperature of the natural gas in consideration of a temperature decreased when the pressure of the natural gas is decreased in the power generation unit (105).

3. The gas expansion power generation system (100) according to claim 1, wherein, in consideration of an amount of the natural gas of which the pressure is decreased in the power generation unit (105), the flow rate adjustment unit (103) is configured to adjust the flow rate of the natural gas such that the natural gas is movable to the power generation unit (105).

4. The gas expansion power generation system (100) according to any of the claims 1 to 3, wherein the natural gas reforming includes a a desulfurization unit (301) which is configured to desulfurize the natural gas of which the pressure is decreased in a pressure regulator (10), a steam reforming unit (303) is configured to primarily steam-reform the desulfurized natural gas into hydrogen and CO, a steam transition unit (305) is configured to increase the concentration of hydrogen through steam transition, and an unreacted gas removal unit (307) is configured to remove unreacted CH₄, CO, and CO₂ to produce hydrogen, and
a portion of waste heat generated when the steam transition unit (305) increases the concentration of hydrogen is supplied to the power generation unit (105).

5. The gas expansion power generation system (100) according to claim 4, wherein a steam generating unit (309) is provided and configured to supply high-temperature steam to the steam reforming unit (303) when the steam reforming unit (303) primarily produces hydrogen and CO, and
the remaining portion of the waste heat generated when the steam transition unit (305) increases the concentration of hydrogen is supplied to the steam generating unit (309).

6. The gas expansion power generation system (100) according to claim 5, wherein partial electric power of the electric power generated by the power generation unit (105) is stored in a grid (3), and
the remaining partial electric power thereof is supplied to the steam generating unit (309) so that the steam generating unit (309) generates high-temperature steam.

7. The gas expansion power generation system (100) according to claim 6, wherein hydrogen produced in the natural gas reforming process is supplied as a source of the fuel cell (400), and
electric power generated in the fuel cell (400) is stored in the grid (3).

8. A gas expansion power generation process, wherein
a heating unit (101) raises the temperature of natural gas;
a flow rate adjustment unit (103) adjusts a flow rate of the natural gas; and
a power generation unit (105) reduces the pressure of the natural gas and concurrently expands the natural gas and generates electric power through energy generated when the natural gas is expanded,
wherein the natural gas is sequentially moved to the heating unit (101), the flow rate adjustment unit (103), and the power generation unit (105), **characterized in that**
the heating (101) unit receives waste heat generated in a natural gas reforming process as a heat source to preheat the natural gas before moving the power generation unit, or to receive waste heat generated in a natural gas reforming process together with waste heat generated in a power generation process through a fuel cell (400) as a heat source to preheat the natural gas before moving the power generation unit.

9. The gas expansion power generation process of claim 8, wherein the heating unit (101) raises the temperature of the natural gas in consideration of a temperature decreased when the pressure of the natural gas is decreased in the power generation unit (105).

10. The gas expansion power generation process of claim 8 or 9, wherein, in consideration of an amount of the natural gas of which the pressure is decreased in the power generation unit (105), the flow rate adjustment unit (103) adjusts the flow rate of the natural gas such that the natural gas moves to the power generation unit (105).

11. The gas expansion power generation process according to any of the claims 8 to 10, wherein a portion of the electric power generated by the power generation unit (105) is utilized in the natural gas reforming process.

## Patentansprüche

1. Gasexpansionsenergieerzeugungssystem (100), das Folgendes umfasst:
eine Heizeinheit (101), die zum Erhöhen der Temperatur von Erdgas konfiguriert ist;
eine Durchflussmengeneinstelleinheit (103), die konfiguriert ist zum Einstellen einer Durchflussmenge des Erdgases; und
eine Energieerzeugungseinheit (105), die so konfiguriert ist, dass sie den Druck des Erdgases verringert und gleichzeitig das Erdgas expandiert, und die so konfiguriert ist, dass sie durch die bei der Expansion des Erdgases erzeugte Energie elektrische Energie erzeugt,
wobei das Erdgas nacheinander zu der Heizeinheit (101), der Durchflussmengeneinstelleinheit (103) und der Energieerzeugungseinheit (105) bewegt werden kann, **dadurch gekennzeichnet, dass**
die Heizeinheit (101) so konfiguriert ist, dass sie in einem Erdgasreformierungsverfahren erzeugte Abwärme als Wärmequelle empfängt, um das Erdgas vor dem Bewegen der Energieerzeugungseinheit vorzuwärmen, oder dass sie in einem Erdgasreformierungsverfahren erzeugte Abwärme zusammen mit in einem Energieerzeugungsverfahren durch eine Brennstoffzelle (400) erzeugter Abwärme als Wärmequelle empfängt, um das Erdgas vor dem Bewegen der Energieerzeugungseinheit vorzuwärmen.

2. Gasexpansionsenergieerzeugungssystem (100) nach Anspruch 1, wobei die Heizeinheit (101) so konfiguriert ist, dass sie die Temperatur des Erdgases unter Berücksichtigung einer Temperatur, die erhöht wird, wenn der Druck des Erdgases in der Energieerzeugungseinheit (105) verringert wird, erhöht.

3. Gasexpansionsenergieerzeugungssystem (100) nach Anspruch 1, wobei die Durchflussmengeneinstelleinheit (103) so konfiguriert ist, dass sie unter Berücksichtigung einer Menge des Erdgases, dessen Druck in der Energieerzeugungseinheit (105) verringert wird, die Durchflussmenge des Erdgases so einstellt, dass das Erdgas zu der Energieerzeugungseinheit (105) bewegt werden kann.

4. Gasexpansionsenergieerzeugungssystem (100) nach einem der Ansprüche 1 bis 3, wobei die Erdgasreformierung eine Entschwefelungseinheit (301), die konfiguriert ist, um das Erdgas zu entschwefeln, dessen Druck in einem Druckregler (10) verringert wird, eine Dampfreformierungseinheit (303), die konfiguriert ist, um das entschwefelte Erdgas primär durch Dampfreformierung in Wasserstoff und CO umzuwandeln, eine Dampfübergangseinheit (305), die konfiguriert ist, um die Konzentration von Wasserstoff durch Dampfübergang zu erhöhen, und eine Einheit (307) zur Entfernung von nicht umgesetztem Gas, die konfiguriert ist, um nicht umgesetztes CH₄, CO und CO₂ zu entfernen, um Wasserstoff zu erzeugen, umfasst, und
ein Teil der Abwärme, die erzeugt wird, wenn die Dampfübergangseinheit (305) die Wasserstoffkonzentration erhöht, der Energieerzeugungseinheit (105) zugeführt wird.

5. Gasexpansionsenergieerzeugungssystem (100) nach Anspruch 4, wobei eine Dampferzeugungseinheit (309) vorgesehen und konfiguriert ist, um Hochtemperaturdampf an die Dampfreformierungseinheit (303) zu liefern, wenn die Dampfreformierungseinheit (303) hauptsächlich Wasserstoff und CO erzeugt, und
der verbleibende Teil der Abwärme, die entsteht, wenn die Dampfübergangseinheit (305) die Wasserstoffkonzentration erhöht, der Dampferzeugungseinheit (309) zugeführt wird.

6. Gasexpansionsenergieerzeugungssystem (100) nach Anspruch 5, wobei ein Teil der von der Energieerzeugungseinheit (105) erzeugten elektrischen Energie in einem Netz (3) gespeichert wird, und
der verbleibende Teil der elektrischen Energie davon der Dampferzeugungseinheit (309) zugeführt wird, so dass die Dampferzeugungseinheit (309) Hochtemperaturdampf erzeugt.

7. Gasexpansionsenergieerzeugungssystem (100) nach Anspruch 6, wobei der im Erdgasreformierungsverfahren erzeugte Wasserstoff als Quelle der Brennstoffzelle (400) zugeführt wird, und
die in der Brennstoffzelle (400) erzeugte elektrische Energie im Netz (3) gespeichert wird.

8. Gasexpansionsenergieerzeugungsverfahren, wobei
eine Heizeinheit (101) die Temperatur von Erdgas erhöht;
eine Durchflussmengeneinstelleinheit (103) die Durchflussmenge des Erdgases einstellt; und
eine Energieerzeugungseinheit (105) den Druck des Erdgases verringert und gleichzeitig das Erdgas expandiert und durch die bei der Expansion des Erdgases erzeugte Energie elektrische Energie erzeugt,
wobei das Erdgas nacheinander zu der Heizeinheit (101), der Durchflussmengeneinstelleinheit (103) und der Energieerzeugungseinheit (105) bewegt wird, **dadurch gekennzeichnet, dass**
die Heizeinheit (101) Abwärme, die in einem Erdgasreformierungsverfahren erzeugt wird, als Wärmequelle empfängt, um das Erdgas vorzuwärmen, bevor die Energieerzeugungseinheit bewegt wird, oder um Abwärme, die in einem Erdgasreformierungsverfahren erzeugt wird, zusammen mit Abwärme, die in einem Energieerzeugungsverfahren erzeugt wird, durch eine Brennstoffzelle (400) als Wärmequelle zu empfangen, um das Erdgas vorzuwärmen, bevor die Energieerzeugungseinheit bewegt wird.

9. Gasexpansionsenergieerzeugungsverfahren nach Anspruch 8, wobei die Heizeinheit (101) die Temperatur des Erdgases unter Berücksichtigung einer Temperatur erhöht, die abnimmt, wenn der Druck des Erdgases in der Energieerzeugungseinheit (105) verringert wird.

10. Gasexpansionsenergieerzeugungsverfahren nach Anspruch 8 oder 9, wobei die Durchflussmengeneinstelleinheit (103) unter Berücksichtigung einer Menge des Erdgases, dessen Druck in der Energieerzeugungseinheit (105) verringert wird, die Durchflussmenge des Erdgases so einstellt, dass sich das Erdgas zur Energieerzeugungseinheit (105) bewegt.

11. Gasexpansionsenergieerzeugungsverfahren nach einem der Ansprüche 8 bis 10, wobei ein Teil der von der Energieerzeugungseinheit (105) erzeugten elektrischen Energie im Erdgasreformierungsverfahren verwendet wird.

## Revendications

1. Système de production d'énergie par détente de gaz (100) comprenant :
une unité de chauffage (101) configurée pour augmenter la température de gaz naturel ;
une unité de réglage de débit (103) configurée pour régler le débit du gaz naturel ; et
une unité de production d'énergie (105) configurée pour réduire la pression du gaz naturel et simultanément détendre le gaz naturel et configurée pour produire de l'énergie électrique grâce à l'énergie générée lorsque le gaz naturel est détendu,
dans lequel le gaz naturel peut être déplacé séquentiellement vers l'unité de chauffage (101), l'unité de réglage de débit (103) et l'unité de production d'énergie (105), **caractérisé en ce que**
l'unité de chauffage (101) est configurée pour recevoir la chaleur résiduelle générée dans un processus de reformage de gaz naturel comme source de chaleur pour préchauffer le gaz naturel avant de déplacer l'unité de production d'énergie, ou pour recevoir la chaleur résiduelle générée dans un processus de reformage de gaz naturel avec la chaleur résiduelle générée dans un processus de production d'énergie à travers une pile à combustible (400) comme source de chaleur pour préchauffer le gaz naturel avant de déplacer l'unité de production d'énergie.

2. Système de production d'énergie par détente de gaz (100) de la revendication 1, dans lequel l'unité de chauffage (101) est configurée pour augmenter la température du gaz naturel en tenant compte d'une température diminuée lorsque la pression du gaz naturel est réduite dans l'unité de production d'énergie (105).

3. Système de production d'énergie par détente de gaz (100) selon la revendication 1, dans lequel, en considération d'une quantité de gaz naturel dont la pression est diminuée dans l'unité de production d'énergie (105), l'unité d'ajustement de débit (103) est configurée pour ajuster le débit du gaz naturel de sorte que le gaz naturel puisse être déplacé vers l'unité de production d'énergie (105).

4. Système de production d'énergie par détente de gaz (100) selon l'une quelconque des revendications 1 à 3, dans lequel le reformage de gaz naturel comprend une unité de désulfuration (301) qui est configurée pour désulfurer le gaz naturel dont la pression est diminuée dans un régulateur de pression (10), une unité de reformage à la vapeur (303) configurée pour reformer principalement à la vapeur le gaz naturel désulfuré en hydrogène et CO, une unité de transition de vapeur (305) configurée pour augmenter la concentration d'hydrogène par la transition à la vapeur, et une unité d'élimination des gaz non réagis (307) configurée pour éliminer les CH₄, CO et CO₂ non réagis afin de produire de l'hydrogène, et
une partie de la chaleur résiduelle générée lorsque l'unité de transition de vapeur (305) augmente la concentration d'hydrogène est fournie à l'unité de production d'énergie (105).

5. Système de production d'énergie par détente de gaz (100) selon la revendication 4, dans lequel une unité de production de vapeur (309) est prévue et configurée pour fournir de la vapeur à haute température à l'unité de reformage à la vapeur (303) lorsque l'unité de reformage à la vapeur (303) produit principalement de l'hydrogène et du CO, et
la partie restante de la chaleur résiduelle générée lorsque l'unité de transition de vapeur (305) augmente la concentration d'hydrogène est fournie à l'unité de production de vapeur (309).

6. Système de production d'énergie par détente de gaz (100) selon la revendication 5, dans lequel une partie de l'énergie électrique générée par l'unité de production d'énergie (105) est stockée dans un réseau (3), et
la partie de l'énergie électrique restante est fournie à l'unité de production de vapeur (309) de sorte que l'unité de production de vapeur (309) génère de la vapeur à haute température.

7. Système de production d'énergie par détente de gaz (100) selon la revendication 6, dans lequel l'hydrogène produit dans le processus de reformage de gaz naturel est fourni comme source de la pile à combustible (400), et
l'énergie électrique générée dans la pile à combustible (400) est stockée dans le réseau (3).

8. Procédé de production d'énergie par détente de gaz, dans lequel
une unité de chauffage (101) augmente la température du gaz naturel ;
une unité de réglage de débit (103) règle le débit du gaz naturel ; et
une unité de production d'énergie (105) réduit la pression du gaz naturel et, simultanément, détend le gaz naturel et produit de l'énergie électrique grâce à l'énergie générée lorsque le gaz naturel est détendu,
dans lequel le gaz naturel est déplacé séquentiellement vers l'unité de chauffage (101), l'unité de réglage de débit (103) et l'unité de production d'énergie (105), **caractérisé en ce que**
l'unité de chauffage (101) reçoit la chaleur résiduelle générée dans un processus de reformage de gaz naturel comme source de chaleur pour préchauffer le gaz naturel avant de déplacer l'unité de production d'énergie, ou pour recevoir la chaleur résiduelle générée dans un processus de reformage de gaz naturel avec la chaleur résiduelle générée dans un processus de production d'énergie à travers une pile à combustible (400) comme source de chaleur pour préchauffer le gaz naturel avant de déplacer l'unité de production d'énergie.

9. Procédé de production d'énergie par détente de gaz de la revendication 8, dans lequel l'unité de chauffage (101) augmente la température du gaz naturel en tenant compte d'une température diminuée lorsque la pression du gaz naturel est réduite dans l'unité de production d'énergie (105).

10. Procédé de production d'énergie par détente de gaz de la revendication 8 ou 9, dans lequel, en considération d'une quantité de gaz naturel dont la pression est diminuée dans l'unité de production d'énergie (105), l'unité d'ajustement de débit (103) ajuste le débit du gaz naturel de telle sorte que le gaz naturel se déplace vers l'unité de production d'énergie (105).

11. Procédé de production d'énergie par détente de gaz selon l'une des revendications 8 à 10, dans lequel une partie de l'énergie électrique générée par l'unité de production d'énergie (105) est utilisée dans le procédé de reformage de gaz naturel.
